# FASCICULE DE BREVET EUROPEEN

(11) **EP 1 445 071 B1**
(45) Date de publication et mention de la délivrance du brevet: **15.04.2009**
(21) Numéro de dépôt: 04290306.2
(22) Date de dépôt: 06.02.2004
(51) Int. Cl.: B25C 1/18, F16B 15/08

(54) **Bande d'éléments de fixation pour appareil de scellement avec chargeur destiné à recevoir la bande, l'appareil et le chargeur**
Nagelstreifen für Setzgerät mit Zuführeinrichtung für das Band, Gerät und Zuführeinrichtung
Nail strip for fastener driving tool, loader for receiving the nail strip and driving tool therefore

(30) Priorité: 10.02.2003 FR 0301548
(43) Date de publication de la demande: 11.08.2004
(73) Titulaire: SOCIETE DE PROSPECTION ET D'INVENTIONS TECHNIQUES SPIT, 26501 Bourg-Les-Valence Cédex (FR)
(72) Inventeur: Almeras, Roland, 07300 Tournon (FR); Vallon, Emmanuel, 26800 Portes les Valence (FR); Herelier, Patrick, 07300 Saint Jean de Muzols (FR)
(74) Mandataire: Bloch, Gérard

(56) Documents cités:
- EP-A- 0 502 667
- EP-A- 0 903 506
- US-A- 5 931 622

## Description

La présente invention se rapporte à une bande d'éléments de fixation selon le préambule de la revendication 1, à un appareil de scellement selon le préambule de la revendication 5 et à un chargeur de scellement selon le préambule de la revendication 6. Une telle bande d'éléments de fixation et un tel appareil est connue du document EP 0 502 667.

Le domaine de l'invention est celui de la fixation d'éléments du type clou, ou tampon, comportant une tige avec une tête arrière et une extrémité avant pointue.

Généralement, on utilise à cet effet un appareil de scellement à tir indirect et on introduit automatiquement dans le canon un élément de fixation à l'aide d'un chargeur.

Pour que, lors de son entraînement dans le canon de l'appareil, après la mise à feu et avant d'être introduit dans le matériau récepteur, l'élément de fixation reste parfaitement coaxial au canon, ne bascule pas sur l'axe et donc reste bien guidé, on a déjà proposé de glisser sur la tige de l'élément de fixation une rondelle ou un pion de guidage.

Les éléments de fixation à pion de guidage peuvent être présentés dans une bande, leurs pions accolés les uns aux autres en un chapelet, la bande étant montée dans un chargeur, avec un ressort de rappel pour, quand le chargeur est monté sur l'appareil, pousser la bande et introduire un pion de guidage dans le canon avant chaque tir. Un chapelet de pions de guidage est décrit, par exemple, dans le brevet EP 0 502 667.

On remarquera qu'avec les éléments de fixation en bande, après chaque tir, le pion de l'élément à entraîner est séparé du pion adjacent par cisaillement par la masselotte de l'appareil puis, au moment de l'enfoncement de l'élément de fixation dans le matériau récepteur, le pion sert d'amortisseur et de rondelle.

Cependant, si un agencement de pions en chapelet peut être efficace pour guider un élément de fixation dans le canon ou le guide-tampon tant que le pion de guidage de l'élément de fixation considéré est encore accolé à un pion adjacent encore situé dans le chargeur, il n'en est plus de même lorsque le dernier élément de fixation de la bande est atteint et qu'il doit être transféré du chargeur dans le canon, car son pion de guidage n'est plus maintenu ni par le pion adjacent ni par la paroi de l'alésage interne du canon (ou du guide-tampon) ouvert sur le chargeur. C'est alors qu'il peut basculer et provoquer un blocage de l'appareil.

C'est pour éviter cela que la demanderesse propose son invention.

A cet effet, l'invention concerne tout d'abord une bande d'éléments de fixation pour appareil de scellement selon la revendication 1.

Ainsi, on empêche le dernier élément de fixation de basculer dans le canon ou le guide-tampon.

La bande d'éléments de fixation pouvant être introduite dans le chargeur dans un sens ou dans un autre, il est préférable que les deux pions de guidage d'extrémité de la bande au moins comportent des moyens de sustentation.

Les moyens de sustentation comportent au moins une oreille s'étendant transversalement au plan général de la bande.

De préférence, chaque pion comporte deux oreilles transversales symétriques par rapport au plan général de la bande, ce qui équilibre la sustentation.

Avantageusement, tous les pions de la bande comportent des oreilles de sustentation, grâce à quoi, si une bande est rompue, les parties de la bande restent utilisables.

L'invention concerne également un appareil de scellement à tir indirect, avec une masselotte destinée à être propulsée dans un alésage pour entraîner un élément de fixation d'une bande d'éléments de fixation telle que définie plus haut et reçue dans un chargeur de l'appareil, appareil caractérisé par le fait que l'alésage, dans lequel la masselotte est destinée à être propulsée et destiné à recevoir l'élément de fixation, avec son pion de guidage pourvu de moyens de sustentation, et est agencé pour recevoir lesdits moyens de sustentation,

ledit alésage, dans lequel est propulsée la masselotte, est rainuré pour recevoir au moins une oreille de sustentation des pions de guidage de la bande d'éléments de fixation.

L'invention concerne enfin, et à titre de produit intermédiaire, un chargeur pour appareil de scellement à tir indirect, avec une masselotte destinée à être propulsée dans un alésage pour entraîner un élément de fixation d'une bande d'éléments de fixation, le chargeur étant agencé pour recevoir la bande d'éléments de fixation et comportant une chambre de réception des pions de guidage des éléments de fixation de la bande, la chambre étant agencée pour recevoir lesdits moyens de sustentation des pions de guidage, etla chambre de réception des pions de guidage du chargeur est rainurée pour recevoir au moins une oreille de sustentation des pions de guidage de la bande d'éléments de fixation.

L'invention sera mieux comprise à l'aide de la description suivante des formes de réalisation préférées de la bande d'éléments de fixation, de l'appareil de scellement et du chargeur de l'invention, en référence au dessin en annexe, sur lequel :
- la figure 1 est une vue en coupe d'un appareil de scellement et de son chargeur de l'art antérieur;
- la figure 2 est une vue en perspective de la bande d'éléments de fixation de l'invention;

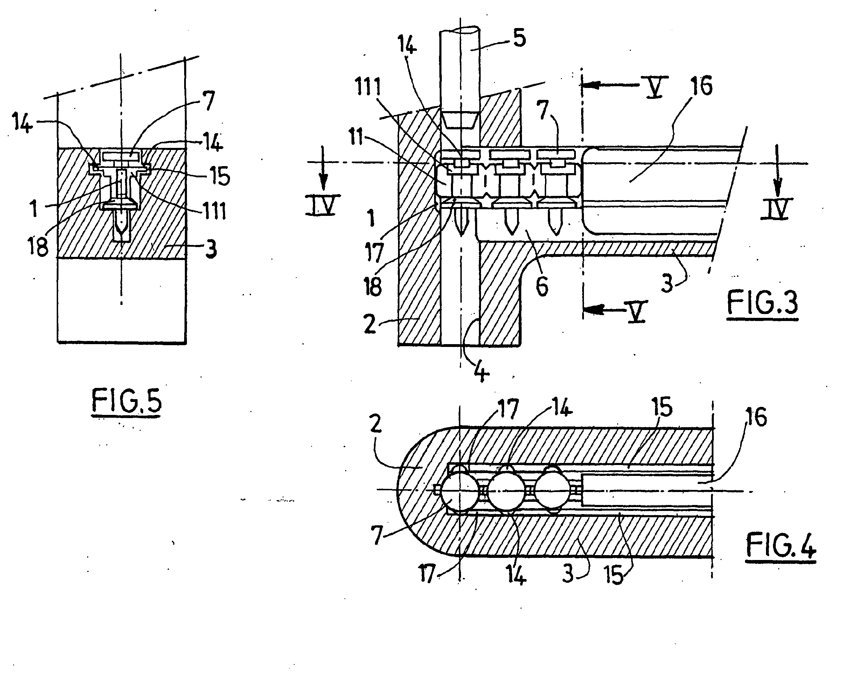

- la figure 3 est une vue en coupe de l'appareil de scellement et de son chargeur de l'invention ;
- la figure 4 est une vue en coupe de l'appareil de scellement et du chargeur, selon la ligne IV-IV de la figure 3 et
- la figure 5 est une vue en coupe du chargeur selon la ligne V-V de la figure 3.

A titre liminaire, le chargeur pouvant être monté, selon les appareils, soit sur leur canon, soit sur leur guide-pointe, on parlera, dans la suite de la description, du corps de l'appareil pour désigner indifféremment l'une ou l'autre de ces pièces.

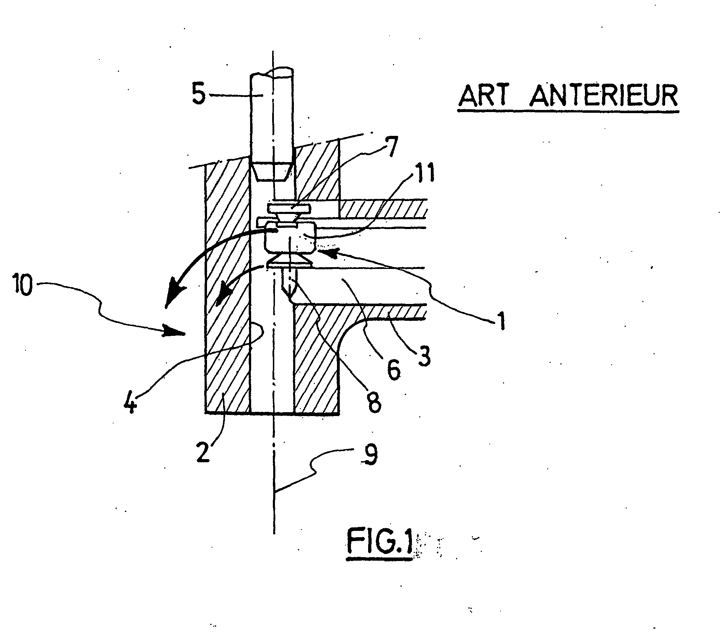

De plus, la figure 1 étant relative à l'art antérieur, les mêmes éléments de l'appareil de l'art antérieur et de l'appareil de l'invention seront associés aux mêmes références.

En référence à la figure 1, l'appareil de scellement 10 comporte un corps 2 et un chargeur 3.

Dans le corps 2 d'axe 9 coulisse une masselotte ou piston 5 d'entraînement d'un élément de fixation 1, en l'espèce le dernier d'une bande, représenté sur la figure en cours de transfert de la chambre 6 de réception de bande du chargeur 3 vers l'alésage 4 du corps.

L'élément de fixation 1 comporte une tige qui est pointue à une extrémité 8 et qui porte une tête 7 à l'autre extrémité. Il est pris dans un pion de guidage 11 pour le guider dans l'alésage 4 du corps.

Comme il s'agit du dernier élément de fixation de la bande, il n'est pas maintenu par un pion adjacent et peut basculer dans l'alésage du corps dans un mouvement illustré par les flèches.

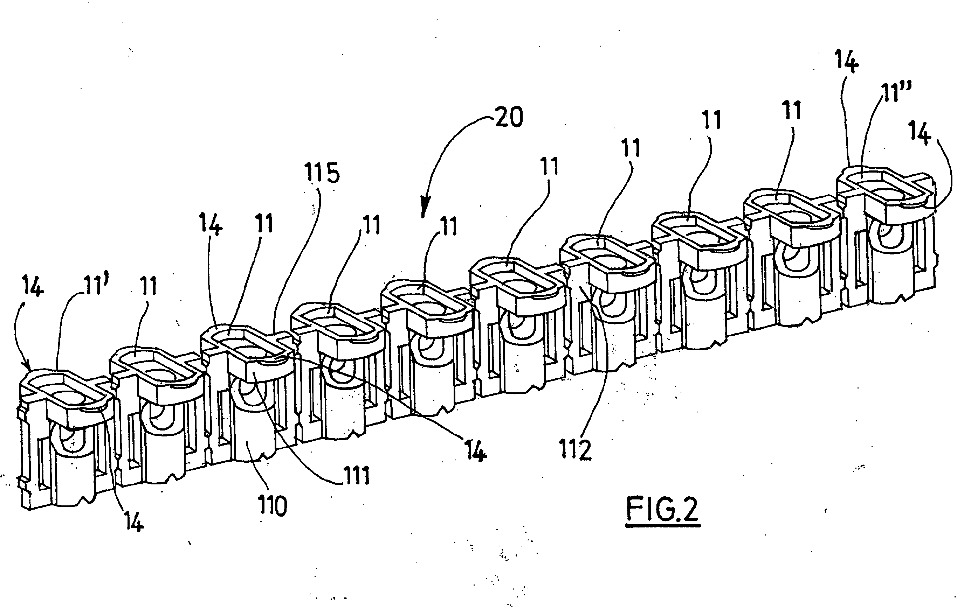

Pour prévenir ce mouvement, en référence à la figure 2, les pions de guidage des éléments de fixation de la bande, formant un chapelet 20, et ici non seulement les pions d'extrémité de bande 11' et 11 mais tous les autres pions 11 également, comportent des oreilles de sustentation 14.

Chaque pion de guidage 11 comporte une partie globalement tubulaire 110, destinée à recevoir la tige 1 d'un élément de fixation, et une couronne 111, surmontant la partie tubulaire 110, également destinée à recevoir la tige de l'élément de fixation, au niveau de sa portion adjacente à la tête 7 qui est elle-même destinée à prendre appui sur cette couronne 111. La couronne 111 est légèrement oblongue, avec un grand axe s'étendant transversalement ici perpendiculairement au plan général 112 du chapelet 20 et donc de la bande d'éléments de fixation quand les éléments de fixation sont engagés dans leurs pions de guidage.

Les oreilles de sustentation 14 sont ménagées en saillie sur la couronne des pions, aux extrémités de son grand axe et ici dans le plan d'extrémité 115 de la couronne. Dans un plan transversal par rapport à l'axe d'un pion de guidage 11, les oreilles de sustentation 14 font donc saillie hors du diamètre hors-tout du pion 11. Il s'agit de petites oreilles en forme de lunule.

De façon correspondante, la chambre 6 du chargeur 3 est rainurée et présente deux rainures 15 de réception des oreilles 14 des couronnes des pions de guidage 11.

Les rainures linéaires 15 du chargeur se prolongent dans le corps 2 par deux petites rainures 17 ménagées dans la paroi de l'alésage 4 également destinées à recevoir les oreilles de sustentation 14 des pions de guidage 11.

En fonctionnement, et après avoir introduit une bande d'éléments de fixation 1 dans la chambre 6 du chargeur 3, la bande est poussée par un curseur 16 agissant sous l'action d'un ressort, non représenté. Les oreilles de sustentation 14 des pions de guidage 11 coulissent dans les rainures 15 du chargeur 3 et les rainures 17 du corps de l'appareil et à chaque nouveau cycle de la masselotte 5, un nouvel élément de fixation 1 est transféré dans l'alésage 4 du corps 2 de l'appareil. On notera que l'élément de fixation 1, entraîné par la masselotte 5, sera ici guidé dans l'alésage 4 non seulement par son pion de guidage 11 mais également par une rondelle 18.

Tant qu'il reste deux éléments de fixation à enfoncer dans un matériau récepteur, il n'y a pas trop de problèmes. Mais, quand il n'en reste plus qu'un, les oreilles de sustentation 14 de son pion de guidage 11 vont pleinement jouer leur rôle. Elles vont maintenir latéralement le pion de guidage 11 et, avec lui, l'élément de fixation 1 et, ainsi, l'empêcher de basculer. Toute anomalie de fonctionnement au dernier tir est ainsi empêchée.

Du fait de la continuité entre les rainures 15 du chargeur 3 et les rainures 17 de l'alésage 4, la fonction de sustentation des oreilles 14 est assurée de façon continue du chargeur 3 dans l'alésage 4 et se poursuit dans l'alésage 4 jusqu'au moment du tir.

On a décrit un chapelet 20 d'empreintes (pions) de guidage 11 à deux oreilles de sustentation transversales 14. Naturellement, on pourrait se contenter de n'en prévoir qu'une seule à chaque pion.

De même, on a décrit des oreilles de sustentation en forme de lunule. On aurait pu aussi envisager des oreilles trapézoïdales, même rectangulaires. Dans tous les cas, il est nécessaire, mais suffisant, que le diamètre transversal hors tout de chaque empreinte, dans le plan des oreilles de sustentation, soit supérieur au diamètre de l'empreinte hors de ce plan, c'est-à-dire au diamètre de l'alésage 4 dans lequel coulisse la masselotte 5.

Sur les figures, le corps de l'appareil et son chargeur, qui sont deux pièces différentes, bien que liées entre elles, sont hachurées de la même façon. Bien entendu, on aura compris qu'il s'agissait d'une simplification du dessin.

## Revendications

1. Bande d'éléments de fixation (1) pour appareil de scellement (10) avec chargeur (3) destiné à recevoir la bande, chaque élément de fixation comportant une tige pointue à une extrémité (8) et portant une tête (7) à l'autre extrémité, les éléments de fixation étant respectivement engagés par leurs tiges dans les pions (11) de guidage réunis les uns aux autres en un chapelet (20) avant qu'ils ne soient transférés, un à un, du chargeur (3) dans l'appareil (2), en position de tir, bande **caractérisée par le fait qu'**au moins l'un des pions de guidage d'extrémité du chapelet (11', 11") comporte au moins une oreille de sustentation (14) s'étendant transversalement au plan général (112) de la bande, agencée pour l'empêcher de basculer lors de son transfert du chargeur (3) dans l'appareil (10), le diamètre transversal hors-tout du pion (11), dans le plan de l'oreille de sustentation, étant supérieur au diamètre du pion hors de ce plan.

2. Bande d'éléments de fixation selon la revendication 1, dans laquelle les deux pions de guidage d'extrémité de la bande (11', 11") au moins comportent des oreilles de sustentation (14).

3. Bande d'éléments de fixation selon l'une des revendications 1 et 2, dans laquelle chaque pion (11', 11") comporte deux oreilles de sustentation transversales (14) symétriques par rapport au plan général de la bande.

4. Bande selon l'une des revendications 1 à 3, dans laquelle tous les pions (11) de la bande comportent des oreilles de sustentation (14).

5. Appareil de scellement à tir indirect (10), avec une masselotte (5) destinée à être propulsée dans un alésage (4) pour entraîner un élément de fixation (1) d'une bande d'éléments de fixation, selon l'une des revendications 1 à 4, appareil **caractérisé par le fait que** l'alésage (4), dans lequel la masselotte (5) est destinée à être propulsée et destiné à recevoir l'élément de fixation (1), avec son pion de guidage (11) pourvu d'une oreille de sustentation (14), est rainuré (17) pour recevoir l'oreille de sustentation (14) dudit pion de guidage (11).

6. Chargeur pour appareil de scellement à tir indirect (10), avec une masselotte (5) destinée à être propulsée dans un alésage (4) pour entraîner un élément de fixation (1) d'une bande d'éléments de fixation, selon l'une des revendications 1 à 4, le chargeur (3) étant agencé pour recevoir la bande d'éléments de fixation et comportant une chambre (6) de réception des pions de guidage (11) des éléments de fixation (1) de la bande, la chambre (6) étant rainurée (15) pour recevoir au moins une oreille de sustentation (14) d'un pion de guidage (11) de la bande d'élements de fixation (1).

## Claims

1. Strip of fasteners (1) for fastener driving tool (10) with loader (3) for receiving the strip, each fastener comprising a shank which is pointed at one end (8) and has a head (7) at the other, the fasteners being individually engaged by their shanks in the guide collars (11) which are connected together in a belt (30) before they are transferred, one by one, from the loader (3) to the tool (2), in the firing position, said strip being **characterized in that** at least one of the endmost guide collars (11', 11'') of the belt has at least one supporting lug (14) extending transversely to the general plane (112) of the strip to prevent it pivoting during its transfer from the loader (3) to the tool (10), the outside transverse diameter of the collar (11), in the plane of the supporting lug, being greater than the diameter of the collar away from this plane.

2. Strip of fasteners according to Claim 1, in which at least the two endmost guide collars (11', 11'') of the strip have supporting lugs (14).

3. Strip of fasteners according to either of Claims 1 and 2, in which each collar (11', 11'') has two transverse supporting lugs (14) which are symmetrical about the general plane of the strip.

4. Strip according to one of Claims 1 to 3, in which all the collars (11) of the strip have supporting lugs (14).

5. Indirect-firing fastener driving tool (10) with a hammer (5) designed to be propelled along a bore (4) to drive a fastener (1) from a strip of fasteners according to one of Claims 1 to 4, said tool being **characterized in that** the bore (4) along which the hammer (5) is to be propelled and which is designed to receive the fastener (1), having a supporting lug (14) on its guide collar (11), is grooved (17) to receive the supporting lug (14) of said guide collar (11).

6. Loader for indirect-firing fastener driving tool (10) with a hammer (5) designed to be propelled along a bore (4) to drive a fastener (1) from a strip of fasteners according to one of Claims 1 to 4, the loader (3) being designed to receive the strip of fasteners and having a chamber (6) for receiving the guide collars (11) of the fasteners (1) of the strip, and the chamber (6) being grooved (15) to receive at least one supporting lug (14) of a guide collar (11) of the strip of fasteners (1).

## Patentansprüche

1. Streifen von Befestigungselementen (1) für ein Setzgerät (10) mit einer Zuführeinrichtung (3), die den Streifen aufnehmen soll, wobei jedes Befestigungselement an einem Ende (8) einen zugespitzen Schaft und am anderen Ende einen Kopf (7) aufweist, wobei die Befestigungselemente jeweils durch ihre Schäfte in Führungszapfen (11) in Eingriff genommen werden, die zu einem Strang (20) zusammengefügt werden, bevor sie nacheinander von der Zuführeinrichtung (3) in das Gerät (2) in Abschussposition geleitet werden, **dadurch gekennzeichnet, dass** mindestens einer der Endführungszapfen (11', 11'') des Strangs mindestens eine Tragöse (14) aufweist, die sich quer zur Gesamtebene (112) des Streifens erstreckt und die dazu angeordnet ist, ein Kippen zu verhindern, wenn er von der Zuführeinrichtung (3) in das Gerät (10) übertragen wird, wobei der Gesamtquerdurchmesser des Zapfens (11) in der Ebene der Tragöse größer ist als der Durchmesser des Zapfens außerhalb dieser Ebene.

2. Streifen von Befestigungselementen nach Anspruch 1, wobei mindestens die beiden Endführungszapfen (11', 11'') des Streifens Tragösen (14) aufweisen.

3. Streifen von Befestigungselementen nach Anspruch 1 oder 2, wobei jeder Zapfen (11', 11'') zwei Quertragösen (14) aufweist, die zur Gesamtebene des Streifens symmetrisch sind.

4. Streifen nach einem der Ansprüche 1 bis 3, wobei alle Zapfen (11) des Streifens Tragösen (14) aufweisen.

5. Setzgerät (10) mit indirektem Abschuss, das einen Treibkolben (5) aufweist, der zum Antrieb eines Befestigungselements (1) eines Befestigungselementstreifens nach einem der Ansprüche 1 bis 4 in einer Bohrung (4) angetrieben werden soll, **dadurch gekennzeichnet, dass** die Bohrung (4), in der der Treibkolben (5) angetrieben werden soll, das Befestigungselement (1) aufnehmen soll, wobei sein mit einer Tragöse (14) versehener Führungszapfen (11) genutet (17) ist, um die Tragöse (14) des Führungszapfens (11) aufzunehmen.

6. Zuführeinrichtung für ein Setzgerät (10) mit indirektem Abschuss, das einen Treibkolben (5) aufweist, der zum Antrieb eines Befestigungselements (1) eines Befestigungselementstreifens nach einem der Ansprüche 1 bis 4 in einer Bohrung (4) angetrieben werden soll, **dadurch gekennzeichnet, dass** die Zuführeinrichtung (3) zur Aufnahme des Befestigungselementstreifens angeordnet ist und eine Kammer (6) zur Aufnahme der Führungszapfen (11) der Befestigungselemente (1) des Streifens aufweist, wobei die Kammer (6) genutet (15) ist, um mindestens eine Tragöse (14) eines Führungszapfens (11) des Streifens von Befestigungselementen (1) aufzunehmen.
